Europäisches Patentamt

European Patent Office

Office européen des brevets

(19)

(11) Veröffentlichungsnummer: **0 272 519**
**B1**

(12) # EUROPÄISCHE PATENTSCHRIFT

(45) Veröffentlichungstag der Patentschrift:
18.07.90

(21) Anmeldenummer: 87117990.9

(22) Anmeldetag: 04.12.87

(51) Int. Cl.⁵: **F16B 12/26**

(54) **Verbindungsbeschlag.**

(30) Priorität: 22.12.86 DE 3644062

(43) Veröffentlichungstag der Anmeldung:
29.06.88 Patentblatt 88/26

(45) Bekanntmachung des Hinweises auf die Patenterteilung:
18.07.90 Patentblatt 90/29

(84) Benannte Vertragsstaaten:
AT ES FR GB IT

(56) Entgegenhaltungen:
EP-A- 0 008 317
EP-A- 0 058 220
EP-A- 0 066 893
EP-A- 0 068 236
EP-A- 0 096 100
WO-A-85/01996
DE-A- 1 966 735
DE-A- 2 810 626
DE-A- 3 314 744
DE-U- 8 531 726
GB-A- 2 074 689
GB-A- 2 125 509

(73) Patentinhaber: **Arturo Salice S.p.A., Via Provinciale Novedratese 10, I-22060 Novedrate (Como)(IT)**

(72) Erfinder: **Salice, Luciano, Via Ronco 30, I-22060 Carimate Como(IT)**

(74) Vertreter: **Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Dipl.-Ing. Armin Zinnecker Widenmayerstrasse 23 D-8000 München 22(DE)**

ACTORUM AG

## Beschreibung

Die Erfindung betrifft einen Verbindungsbeschlag nach dem Oberbegriff des Patentanspruchs 1 (EP-A 58 220).

Aus DE-A 1 966 735 ist ein Verbindungsbeschlag bekannt, von dem der eine Beschlagteil aus einem mit einem kegeligen Kopf versehenen Zapfen und der andere Beschlagteil aus einem topfförmigen Gehäuse besteht, in dem eine mit einem Stanzloch versehene Schließplatte gegen die Kraft einer Spiralfeder eindrückbar gelagert ist. Dabei ist das topfförmige Gehäuse des zweiten Beschlagteils in seiner Wandung mit einem Durchbruch versehen, durch den das zapfenförmige Beschlagteil in der Weise einschiebbar ist, daß der kegelige Kopf mit einem Randbereich derart in das Stanzloch der Schließplatte einschnappt, daß die beiden Beschlagteile miteinander verrastet sind. Zum Lösen dieser Rastverbindung ist in das topfförmige Gehäuse ein Druckknopf eingesetzt, durch den sich die Schließplatte in eine den Kopf des ersten Beschlagteils freigebende Stellung herabdrücken läßt. Dieser bekannte Verbindungsbeschlag vermag eine feste Verbindung nicht immer zu gewährleisten, weil der Kopf des ersten Beschlagteils nur mit einem Randbereich in dem Stanzloch der Schließplatte verrastet ist und weil nicht ausgeschlossen werden kann, daß unabsichtlich der Druckknopf unter Lösung der Rastverbindung eingedrückt wird.

Vorzugsweise selbstspannende Verbindungsbeschläge nach dem Oberbegriff des Patentanspruchs 1 sind aus EP-A 0 058 220 bekannt. Bei diesen bekannten Verbindungsbeschlägen erfolgt die Rastverbindung sowie die gegebenenfalls vorgesehene selbstspannende Wirkung durch den federbelasteten, mit seinem hakenförmigen Teil einen Rastvorsprung o.dgl. hintergreifenden Rasthebel. Da es sich bei Verbindungsbeschlägen dieser Art um Massenprodukte handelt, bei denen die Fertigungstoleranzen nicht immer so genau eingehalten sind, daß eine gegebenenfalls selbstspannende Wirkung oder eine spielfreie Verbindung gewährleistet ist, kann deren einwandfreie Funktion gefährdet sein. Es läßt sich somit bei diesen bekannten Verbindungsbeschlägen nicht ausschließen, daß aufgrund von Fertigungsungenauigkeiten ein ein Wackeln verursachendes Spiel zwischen den miteinander verbundenen Beschlagteilen eintritt. Schließlich kann auch die Sicherheit der Verbindung beeinträchtigt sein, so daß es zu einem unbeabsichtigten Lösen der Beschlagteile kommen kann.

Die Sicherheit und die spielfreie Verbindung der bekannten Verbindungsbeschläge hängt nicht nur von den einzuhaltenden Fertigungstoleranzen, sondern auch von der den Rasthebel beaufschlagenden Rastfeder ab, die die erforderliche Sperrkraft erzeugt. Ist diese Sperrkraft nicht groß genug, ist bei unsachgemäßer Handhabung ein unbeabsichtigtes Lösen zu befürchten.

Aufgabe der Erfindung ist es daher, einen Verbindungsbeschlag nach dem Oberbegriff des Patentanspruchs 1 zu schaffen, dessen Sicherheit dadurch erhöht ist, daß er sich wahlweise durch starr zusammenwirkende Verbindungsmittel verriegeln läßt.

Erfindungsgemäß wird diese Aufgabe bei einem Verbindungsbeschlag der gattungsgemäßen Art durch die kennzeichnenden Merkmale des Patentanspruchs 1 gelöst.

Bei dem erfindungsgemäßen Verbindungsbeschlag läßt sich durch entsprechende Einstellung das Widerlagerteil in Stellungen verbringen, in denen es sich einmal blockierend auf dem Rasthebel abstützt, so daß sich die Verbindung der Beschlagteile nur wieder aufheben läßt, wenn das Widerlagerteil in eine eine Lösung zulassende Stellung bewegt wird und in denen sich zum anderen die den Rasthebel belastende Feder auf diesem abstützt, ohne daß das Widerlagerteil unmittelbar an dem Rasthebel anliegt. Dabei läßt sich die von der Feder auf den Rasthebel ausgeübte Kraft durch entsprechende Einstellung des Widerlagerteils verändern. Insbesondere ist es möglich, durch entsprechende Verstellung des Widerlagerteils die Spannkraft der Feder soweit herabzusetzen, daß sich die Rastverbindung der Beschlagteile ohne besondere Hilfsmittel nur durch entsprechenden Gegendruck wieder lösen läßt.

Nach einer bevorzugten Ausführungsform ist vorgesehen, daß das Widerlagerteil aus einem in einer zylindrischen Ausnehmung oder Bohrung des gehäuseartigen zweiten Beschlagteils gehalterten zylindrischen Widerlagerbolzen besteht, der durch radiale Vorsprünge in Ausnehmungen der Wandung der Bohrung in unterschiedlichen in axialer Richtung der Bohrung verschobenen Stellungen festlegbar ist. Der radiale Vorsprung kann aus einem Nocken bestehen, der in eine in der Wandung der Bohrung vorgesehene Führungsnut greift. Die Führungsnut kann sich etwa über den gesamten Umfang der Innenwandung der zylindrischen Ausnehmung oder Bohrung erstrecken. Zweckmäßigerweise besteht die Führungsnut aus einem Umfangsteil ohne Steigung und einen an diesen anschließenden Umfangsteil mit Steigung. Weist der Nocken oder ein anderer Bereich des Widerlagerbolzens in weiter Ausgestaltung der Erfindung einen axialen Fortsatz auf, kann sich dieser nur durch Drehen des Widerlagerbolzens zwischen Stellungen bewegen, in denen er sich blockierend in der Verriegelungsstellung auf dem Rasthebel abstützt oder diesen freigibt, so daß dieser nur durch die diesen belastende Feder in seiner Verriegelungsstellung gehalten wird.

Zweckmäßigerweise ist das Gehäuse des zweite Beschlagteils zweiteilig mit durch dessen axialer Mittelebene verlaufender Trennfuge ausgebildet, wobei beide Gehäuseteile mit Teilen der Führungsnut versehen sind, von denen ein Teil rechtwinkelig und ein Teil spitzwinkelig zu der Mittelachse der Bohrung verlaufen und die Führungsnuten in einer Trennfuge miteinander flachen. Derartige Gehäuse lassen sich günstig als Kunststoffspritzgießteile herstellen.

Zweckmäßigerweise ist der Nocken am inneren Ende des Widerlagerbolzens vorgesehen.

In weiterer Ausgestaltung der Erfindung ist vorgesehen, daß der Widerlagerbolzen mit einem Außengewinde und die Bohrung mit einem entsprechenden Innengewinde versehen ist. Durch Drehen des Widerlagerbolzens beispielsweise mit einem Schraubenzieher läßt sich einemal die Vorspannkraft der den Rasthebel belastenden Feder verändern oder es läßt sich dieser vollständig blockieren, wenn der Widerlagerbolzen bis zur Anlage an dem Rasthebel eingeschraubt wird.

Zweckmäßigerweise ist der hakenförmige Kopf des Rasthebels in Einschubrichtung des hintergreifbaren Teils abgeschragt, so daß der Rasthebel nur durch Zusammenschieben der Beschlagteile in seine verrastete Stellung hinter dem hintergreifbaren Teil schnappt.

Zweckmäßigerweise ist die Innenflanke des hakenförmigen Vorsprungs mit einer abgeschragten oder abgerundeten Rastflanke versehen. Diese kann eine selbstspannende Wirkung erzeugen und andererseits auch ein Lösen der Rastverbindung durch Gegendruck insbesondere dann ermöglichen, wenn die Spannkraft der Feder durch entsprechende Verschiebung des Widerlagerbolzens herabgesetzt wird.

Die Achse der Bohrun für den Widerlagerbolzen kann zur Mittelachse des topfförmigen zweiten Beschlagteils geneigt sein, so daß sich ein Schraubenzieher leichter zur Betätigung des Widerlagerbolzens ansetzen läßt.

Ausführungsbeispiele der Erfindung werden nachstehend anhand der Zeichnung näher erlautert. In dieser zeigt

Fig. 1 einen Längsschnitt durch eine erste Ausführungsform eines Verbindungsbeschlages, dessen Beschlagteile mit den zu verbindenden Möbelteilen verbunden sind, im montierten Zustand der Möbelteile,

Fig. 2 einen der Fig. 1 entsprechenden Langsschnitt durch den Verbindungsbeschlag, dessen Rasthebel in seiner Verriegelungsstellung blockiert ist,

Fig. 3 einen Längsschnitt durch den Verbindungsbeschlag nach den Fig. 1 und 2 nach Aufheben der Blockierung des Rasthebels und Entlastung der den Rasthebel belastenden Feder, so daß sich die Verbindung durch nach oben gerichteten Gegendruck lösen laßt,

Fig. 4 eine Seitenansicht des bolzenförmigen ersten Beschlagteils,

Fig. 5 eine perspektivische Ansicht des zweiten Beschlagteils,

Fig. 6 eine Draufsicht auf den zweiten aus einem Kunststoffspritzgußteil bestehenden Beschlagteil vor dem Zusammenfügen in seiner vertikalen Mittelebene,

Fig. 7 eine perspektivische Ansicht des Rasthebels,

Fig. 8 eine perspektivische Ansicht des Widerlagerbolzens,

Fig. 9 einen Längsschnitt durch eine zweite Ausführungsform eines Verbindungsbeschlages, dessen Beschlagteile mit den zu verbindenden Möbelteilen verbunden sind, im montierten Zustand der Möbelteile,

Fig. 10 eine perspektivische Ansicht des ersten Beschlagteils der Verbindungsbeschlages nach Fig. 9 in seinem an einem Möbelteil befestigten Zustand und

Fig. 11 eine perspektivische Ansicht des Rasthebels des zweiten Beschlagteils des Verbindungsbeschlages nach Fig. 9.

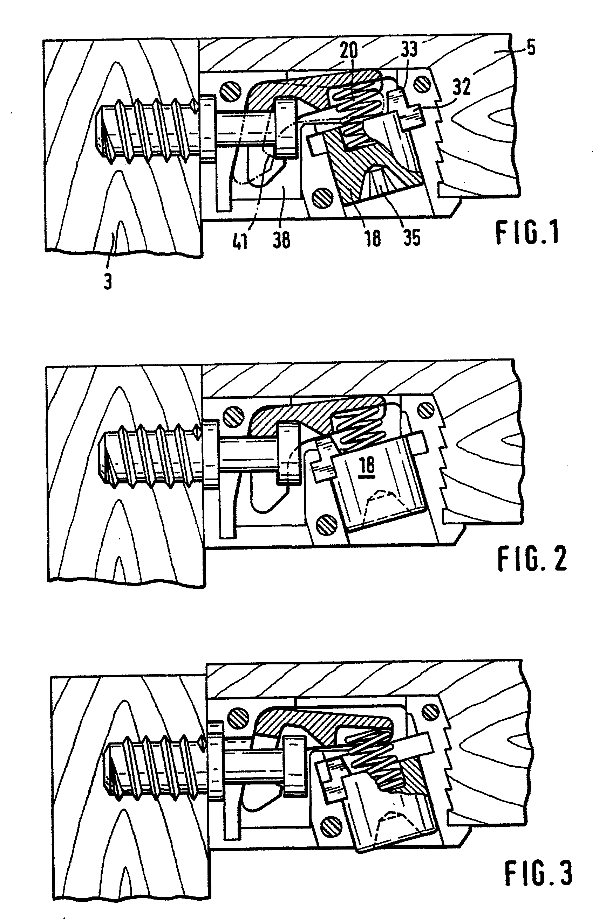

Der Verbindungsbeschlag nach den Fig. 1 bis 8 besteht aus einem bolzenförmigen Beschlagteil 1, dessen unterer mit einem Gewinde versehener Schaft 2 nach den Ausführungsbeispielen gemäß den Fig. 1 bis 3 beispielsweise in eine vertikale Schrankwand 3 einschraubbar ist, und aus einem zweiten topfförmigen Beschlagteil 4, das in der ebenfalls aus den Fig. 1 bis 3 ersichtlichen Weise beispielsweise in einer eingefrasten Bohrung einer Deckplatte 5 oder eines Zwischenbodenteils befestigbar ist.

Das erste Beschlagteil 1 läßt sich mit seinem Gewindeteil 2 in ein Möbelteil einschrauben, bis es mit seinem Bund 6 auf der Oberfläche des Möbelteils anschlägt. Zwischen dem Bund 6 und seinem mit einem Schraubenzieherschlitz versehenen Kopf 7 ist das Beschlagteil 1 mit einem gewindefreien Schaftteil 8 versehen. Der zweite Beschlagteil 4 besteht aus einem mit sägezahnartigen Rippen versehenen topfförmigen Gehause 9, das teilweise durch eine flanschartige Deckplatte 10 geschlossen ist. Es weist eine abgeflachte Vorderseite 11 auf, mit der es montierten Zustand an dem anzuschließenden Möbelgegenteil anliegt und die schlitzartig mit einem nach oben hin offenen Langloch 12 versehen ist, das sich in der dargestellten Weise bis in die flanschartige Deckplatte 10 hinein erstreckt.

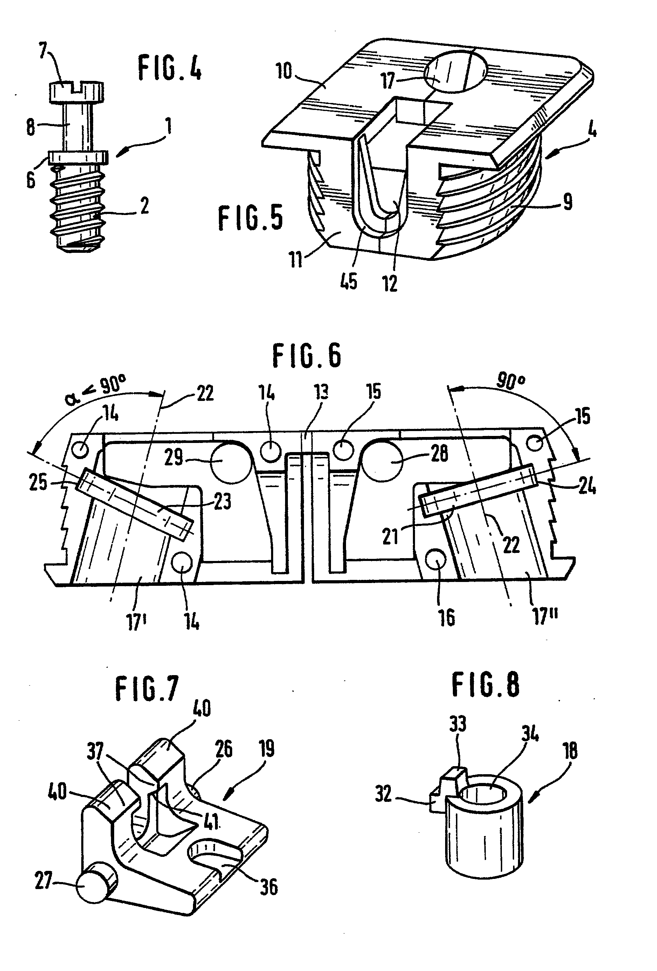

Das gehäuseartige zweite Beschlagteil 4 wird in der aus Fig. 6 ersichtlichen Weise zweiteilig als Kunststoffspritzgußteil hergestellt, wobei die Teile nach ihrer Herstellung durch einen dünnen filmscharnierartigen Streifen 13 miteinander verbunden sind. Die linke Hälfte des topfförmigen Scharnierteils 4 ist mit zapfenartigen Vorsprüngen 14 versehen, die sich zur Verbindung der Hälften des Beschlagteils in entsprechende Ausnehmungen 15 des anderen Beschlagteils eindrücken lassen. Jede Hälfte des Beschlagteils 4 ist mit einer halbzylindrischen muldenförmigen Ausnehmung 17', 17" versehen, die im zusammengefügten Zustand eine zylindrische Bohrung 17 bilden, in der der Widerlagerbolzen 18 für die den Rasthebel 19 beaufschlagende Feder 20 gehaltert ist.

Die muldenförmige Ausnehmung 17' ist in ihrem inneren Endbereich mit einer halbringförmigen Nut 21 versehen, die rechtwinkelig zur Mittellinie 22 der Bohrung 17 verläuft. Hingegen ist die muldenförmige Ausnehmung 17' mit einer halbringförmigen Nut 23 versehen, die mit der Mittellinie 22 einen Winkel $\alpha$ einschließt, der kleiner als 90° ist. Im montierten Zustand des topfförmigen Beschlagteils 4 liegen die Enden 24, 25 der halbringförmigen Nuten 21, 23 aufeinander, so daß sie eine miteinander verbundene Führungsnut bilden.

Der aus Fig. 7 ersichtliche Rasthebel 19 ist als Winkelhebel ausgebildet und weist im Verbindungsbereich seiner Schenkel miteinander fluchtende Lagerzapfen 26, 27 auf, die in entsprechenden Ausnehmungen 28, 29 des topfförmigen Gehäuses 9 gehaltert sind. Der Widerlagerbolzen 18 ist in der Bohrung 17 dadurch gehaltert und festgelegt, daß er an seinem unteren Ende mit einem radialen Nocken 32 versehen ist, mit dem er im montierten Zustand in die Führungsnuten 21, 23 greift. Zusätzlich ist der radiale Nocken 32 mit einem axialen Fortsatz 33 versehen, der die untere Stirnfläche des Widerlagerbolzens 18 überragt. In der unteren Stirnfläche weist der Widerlagerbolzen eine Ausnehmung 34 auf, in der ein Ende der Schraubendruckfeder 20 festgelegt ist. In seiner äußeren Stirnfläche ist der Widerlagerbolzen 18 mit einer sternförmigen Ausnehmung 35 zum Ansatz eines Schraubenziehers versehen.

Das andere Ende der Schraubendruckfeder 20 ist in einer Ausnehmung 36 des Rasthebels 19 festgelegt. Der mit den hakenartigen Vorsprüngen 37 versehene Schenkel des Rasthebels 19 liegt in der aus den Fig. 1 bis 3 ersichtlichen Weise in der Einschuböffnung 38 des zweiten Beschlagteils 4 für den verbreiterten Kopf 7 des ersten Beschlagteils 1. Die Außenseiten der hakenartigen Vorsprünge 37 des Schenkels sind mit keilförmig abgeschrägten Flächen 40 versehen, so daß der Rasthebel durch den eingeschobenen verbreiterten Kopf 7 des ersten Beschlagteils 1 zurückgeschwenkt wird, bis die abgeschrägten rückwartigen Rastflanken 41 der hakenartigen Vorsprünge hinter dem verbreiterten Kopf 7 einschnappen, wie dies aus Fig. 1 ersichtlich ist.

Um eine gute Anlage der Vorderseite 11 des zweiten Beschlagteils 4 an der anzuschließenden Oberfläche des Möbelteils 3 zu gewährleisten, ist in der Vorderseite 11 eine breitere Nut 45 für den Bund 6 vorgesehen, deren Höhe der Höhe des Bundes entspricht.

Die Funktion des Verbindungsbeschlages wird nun anhand der Fig. 1 bis 3 erläutert. Der Verbindungsbeschlag wird in der aus Fig. 1 ersichtlichen Weise geliefert, in der sich der Nocken 32 an der der Einschuböffnung 12 gegenüberliegenden Seite des zweiten Beschlagteils 4 im Bereich der Enden 24, 25 der Führungsnuten 21, 23 befindet. Der von der Druckfeder 20 beaufschlagte Schenkel des Rasthebels 19 ist nur so lang ausgebildet, daß er vor dem Fortsatz endet, wenn dieser in seine hintere Stellung 24, 25 gedreht worden ist. Die Ausgestaltung kann natürlich auch so sein, daß der nach hinten weisende Schenkel eine Aussparung aufweist, so daß der Fortsatz 33 in seiner hinteren Stellung nicht im Eingriff mit diesem ist. In dieser aus Fig. 1 ersichtlichen Stellung wird also der nach hinten weisende Schenkel des Rasthebels 19 von der entsprechend vorgespannten Druckfeder 20 beaufschlagt, so daß sich die Verbindun der Möbelteile dadurch herstellen läßt, daß der Schaftteil 8 und der verbreiterte Kopf 7 des ersten Beschlagteils in die Einschuböffnung 12 eingeschoben wird, bis das hakenförmige Endteil 37 hinter den verbreiterten Kopf 7 einschnappt und diesen gabelförmig einfaßt. Dabei können die abgeschrägten Rastflanken 41 eine spannende Wirkung auf den Kopf 7 ausüben.

Erscheint diese selbstspannende Verbindung nicht sicher genug, kann der Widerlagerbolzen 18 durch einen Schraubenzieher nach rechts gedreht werden, so daß der nockenartige Vorsprung 32 in der halbrinförmigen Nut 24 ohne Steigung nach vorn gedreht wird und sich der Vorsprung 33 in der aus Fig. 2 ersichtlichen Weise blockierend auf den unteren Schenkel des Rasthebels 19 legt.

Zum Öffnen des Verbindungsbeschlages kann der Widerlagerbolzen 18 um etwa eine Drehung durch einen Schraubenzieher nach links gedreht werden, so daß er über die Verbindungsstelle 24, 25 in die mit einer Steigung versehene Führungsnut 23 hineinwandert und in seiner aus Fig. 3 ersichtlichen Endstellung die Druckfeder 20 soweit entlastet, daß sich die Verbindung ohne besondere Hilfsmittel nur durch leichten Gegendruck wieder lösen läßt.

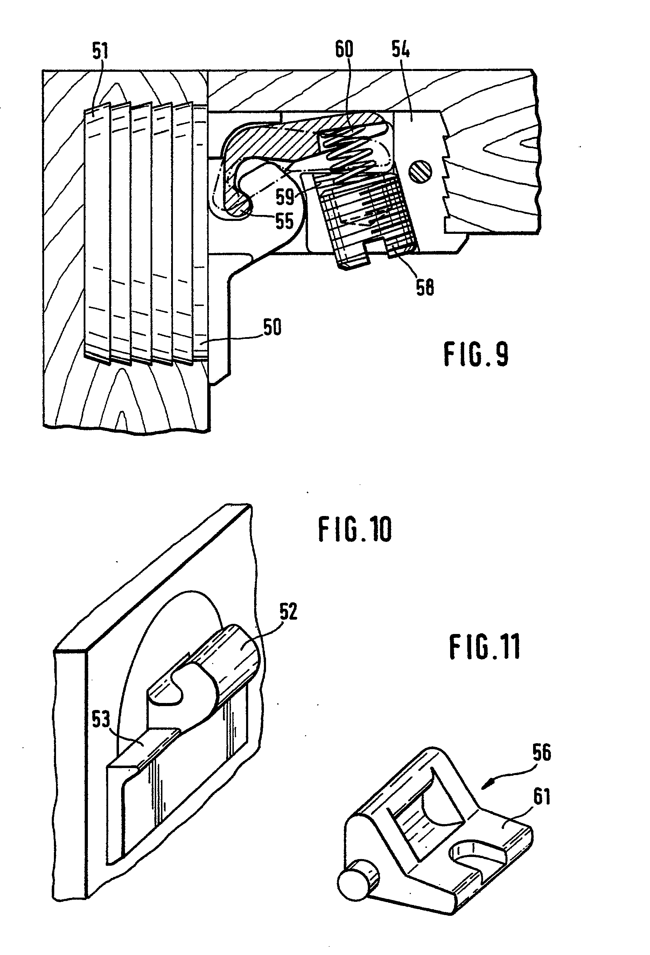

Aus den Fig. 9 bis 11 ist eine zweite Ausführungsform des Verbindungsbeschlages ersichtlich, bei dem auch das erste Beschlagteil 50 ein topfförmiges Einlaßgehäuse 51 besitzt. Dieses topfförmige Einlaßgehäuse ist mit einem hakenartigen Vorsprung 52 versehen, der in seinem unteren Bereich mit einer konsolenartigen Abstützfläche 53 versehen ist. Das zweite Beschlagteil 54 ist mit einer Eintrittsöffnung für das hakenförmige Teil 52 versehen, in der hakenartige Schenkel 55 des Rasthebels 56 liegt. Die miteinander verhakenden Teile des hakenförmigen Teils 52 sowie des Rasthebels 56 sind gekrümmt oder ballig ausgebildet, so daß sie auch selbstsspannend ineinandergreifen können.

Bei der Ausführungsform nach den Fig. 9 bis 11 ist der Widerlagerbolzen 58 mit einem Gewinde versehen und in ein entsprechendes Innengewine der Bohrung oder Ausnehmung 59 einschraubbar, so daß die Druckfeder 60 entsprechend der Einschraubtiefe des Widerlagerbolzens 58 gespannt werden kann.

Der Widerlagerbolzen 58 läßt sich so tief in das Gehäuse des zweiten Beschlagteils 54 einschrauben, daß er sich blockierend auf den inneren Schenkel 61 des Rasthebels 56 legt.

Im übrigen weist der Verbindungsbeschlag nach den Fig. 9 bis 11 eine dem Verbindungsbeschlag nach den Fig. 1 bis 8 entsprechende Ausgestaltung auf.

## Patentansprüche

1. Verbindungsbeschlag zum lösbaren Verbinden zweier vorzugsweise rechtwinkelig aufeinanderstoßender plattenförmiger Möbelteile (3, 5), bestehend aus zwei an jedem der zu verbindenden Möbelteile (3, 5) befestigbaren Beschlagteilen (1, 4, 51, 54), von denen der erste (1) mit einem hintergreifbaren Teil (7), z.B. mit einer Stufe, einer Abstützleiste oder einem pilzförmigen Kopf versehen ist, hinter den zur Verriegelung beider Beschlagteile (1, 4, 51, 54) miteinander ein hakenförmiges Endteil (37, 55) eines schwenkbaren Rasthebels (19, 56) des zweiten Beschlagteils (4, 54) greift oder schnappt, und aus einer den Rasthebel (19, 56) belastenden Feder (20, 60), die zwischen diesem und einem Widerlagerteil (18, 58) des zweiten Beschlagteils (4, 54) eingespannt ist, dadurch gekennzeichnet, daß das Widerlagerteil (18, 58) zwischen einer den Hebel (18, 56) in seiner verrasteten Stellung blockierenden Stellung und mindestens einer den Rasthebel über die Feder (20, 60) belastenden Stellung beweglich und in diesen Stellungen festgelegt ist.

2. Verbindungsbeschlag nach Anspruch 1, dadurch gekennzeichnet, daß das Widerlagerteil (18) aus einem in einer zylindrischen Ausnehmung (17) oder Bohrung des gehäuseartigen zweiten Beschlagteils (4) gehalterten zylindrischen Widerlagerbolzens (18) besteht, der durch einen radialen Vorsprung (32) den Ausnehmungen der Wandung der Bohrung in unterschiedlichen in axialer Richtung der Bohrung verschobenen Stellungen festlegbar ist.

3. Verbindungsbeschlag nach Anspruch 2, dadurch gekennzeichnet, daß der radiale Vorsprung aus einem Nocken (32) besteht, der in eine in der Wandung der Bohrung (17) vorgesehene Führungsnut (21, 23) greift.

4. Verbindungsbeschlag nach Anspruch 3, dadurch gekennzeichnet, daß sich die Führungsnut (21, 23) etwa über den gesamten Umfang der Innenwandung der Bohrung (17) erstreckt.

5. Verbindungsbeschlag nach Anspruch 3 oder 4, dadurch gekennzeichnet, daß die Führungsnut aus einem Umfangsteil (21) ohne Steigung einem an diesen anschließenden Umfangsteil (23) mit Steigung besteht.

6. Verbindungsbeschlag nach einem der Ansprüche 1 bis 5, dadurch gekennzeichnet, daß das Gehäuse (9) des zweiten Beschlagteils (4) zweiteilig mit durch dessen axialer Mittelebene verlaufender Trennfuge ausgebildet ist, beide Gehäuseteile mit Teilen (21, 23) der Führungsnut versehen sind, von denen ein Teil (21) rechtwinkelig und ein Teil (23) spitzwinkelig zu der Mittelachse (22) der Bohrung (17) verlaufen, und daß die Führungsnuten in einer Trennfuge miteinander fluchten.

7. Verbindungsbeschlag nach einem der vorhergehenden Ansprüche 2–6, dadurch gekennzeichnet, daß der Nocken (32) am inneren Ende des Widerlagerbolzens (18) vorgesehen ist.

8. Verbindungsbeschlag nach einem der vorhergehenden Ansprüche, dadurch gekennzeichnet, daß der Widerlagerbolzen (18) einen axialen Fortsatz (33) aufweist, mit dem sich dieser in seiner eingeschobenen bzw. entsprechend gedrehten Stellung auf dem Rasthebel (19) abstützt.

9. Verbindungsbeschlag nach Anspruch 8, dadurch gekennzeichnet, daß sich der Fortsatz (33) durch Drehung des Widerlagerbolzens (18) in eine Stellung bewegbar ist, in der er sich außer Eingriff mit dem Rasthebel (19) befindet.

10. Verbindungsbeschlag nach Anspruch 1, dadurch gekennzeichnet, daß der Widerlagerbolzen (58) mit einem Außengewinde und die Bohrung (59) mit einem entsprechenden Innengewinde versehen ist.

11. Verbindungsbeschlag nach einem der vorhergehenden Ansprüche, dadurch gekennzeichnet, daß der Rasthebel (19, 56) aus einem Winkelhebel besteht.

12. Verbindungsbeschlag nach Anspruch 11, dadurch gekennzeichnet, daß ein Schenkel des Winkelhebels mit der Feder belastet und der andere mit em hakenförmigen Vorsprung (37) versehen ist.

13. Verbindungsbeschlag nach einem der vorhergehenden Ansprüche, dadurch gekennzeichnet, daß das hakenförmige Endteil (37) auf seiner Außenseite in Einschubrichtung des hintergreifbaren Teils abgeschrägt ist.

14. Verbindungsbeschlag nach einem der vorhergehenden Ansprüche, dadurch gekennzeichnet, daß die Innenflanke des hakenförmigen Endteils mit einer abgeschrägten oder abgerundeten Rastflanke (41) versehen ist.

15. Verbindungsbeschlag nach einem der vorhergehenden Ansprüche, dadurch gekennzeichnet, daß der erste Beschlagteil (1) aus einem einschraubbaren Bolzen mit pilzförmigem Kopf (7) besteht und der zweite gehäuseförmige Beschlagteil (4) mit einer Öffnung (12) versehen ist, in der der mit dem hakenförmigen Teil versehene Schenkel des Rasthebels liegt und in die der Widerlagerbolzen in dessen radialer Richtung einschiebbar ist.

16. Verbindungsbeschlag nach einem der Ansprüche 1 bis 14, dadurch gekennzeichnet, daß das erste Beschlagteil (50) aus einem topfförmigen Befestigungsteil mit einem hakenförmigen Teil (52) besteht, hinter das der entsprechend komplementär ausgebildete hakenförmige Teil des Rasthebels (56) greift.

17. Verbindungsbeschlag nach einem der Ansprüche 1 bis 16, dadurch gekennzeichnet, daß die Achse (22) der Bohrung (17, 59) für den Widerlagerbolzen (18, 58) zur Mittelachse des topfförmigen zweiten Beschlagteils (4, 54) geneigt ist.

## Revendications

1. Ferrure d'assemblage pour un assemblage démontable de deux éléments de meuble (3, 5), sous forme de plaques, s'aboutant l'un à l'autre de préférence à angle droit, comprenant deux éléments de ferrure (1, 4; 51, 54) pouvant être fixés sur chacun des éléments de meuble (3, 5), le premier élément de ferrure (1) étant pourvu d'une partie (7) pouvant être saisie par l'arrière, par exemple un palier, une barrette d'appui ou une tête en forme de champignon, sur laquelle s'engage ou s'enclenche une partie d'extrémité (37, 55), en forme de crochet, d'un levier d'encliquetage (19, 56) pivotant du deuxième élément de ferrure (4, 54) pour verrouiller les deux éléments de ferrure (1, 4; 51, 54) l'un à l'autre, et un ressort (20, 60), chargeant le levier d'encliquetage (19, 56), qui est encastré entre ce dernier et un élément de butée (18, 58) du deuxième élément de ferrure (4, 54), caractérisée en ce que l'élément de butée (18, 58) peut se déplacer entre une position bloquant le levier (18, 56) dans une position enclenchée et au moins une position chargeant le levier d'encliquetage au moyen du ressort (20, 60) et en ce qu'il est immobilisé dans ces positions.

2. Ferrure d'assemblage selon la revendication 1, caractérisée en ce que l'élément de butée (18) consiste en un boulon de butée (18) cylindrique, maintenu dans un évidement cylindrique (17) ou perçage du deuxième élément de ferrure (4) en forme de boîtier, et ledit élément de butée (18) peut être fixé au moyen d'une saillie radiale (18) dans les évidements de la paroi du perçage dans différentes positions déplacées dans la direction axiale du perçage.

3. Ferrure d'assemblage selon la revendication 2, caractérisée en ce que la saillie radiale consiste en une came (32) qui s'engage dans une rainure de guidage (21, 23) prévue dans la paroi du perçage (17).

4. Ferrure d'assemblage selon la revendication 3, caractérisée en ce que la rainure de guidage (21, 23) s'étend approximativement sur toute la circonférence de la paroi intérieure du perçage (17).

5. Ferrure d'assemblage selon la revendication 3 ou 4, caractérisée en ce que la rainure de guidage se compose d'un élément circonférentiel (21) sans pas et d'un élément circonférentiel (23) avec pas, dans le prolongement dudit premier élément.

6. Ferrure d'assemblage selon l'une quelconque des revendications 1 à 5, caractérisée en ce que le boîtier (9) du deuxième élément de ferrure (4) est réalisé en deux parties avec une ligne de séparation s'étendant sur le plan axial médian dudit élément de ferrure (4), les deux parties du boîtier sont pourvues d'éléments (21, 23) de la rainure de guidage dont un élément (21) s'étend à angle droit et un élément (23) à angle aigu par rapport à l'axe médian (22) du perçage (17), et les rainures de guidage sont alignées entre elles sur une ligne de séparation.

7. Ferrure d'assemblage selon l'une quelconque des revendications 2 à 6, caractérisée en ce que la came (32) est prévue à l'extrémité interne du boulon de butée (18).

8. Ferrure d'assemblage selon l'une quelconque des revendications précédentes, caractérisée en ce que le boulon de butée (18) comporte un prolongement axial (33) par lequel il s'appuie sur le levier d'encliquetage (19) lorsqu'il est dans sa position insérée ou dans sa position pivotée correspondante.

9. Ferrure d'assemblage selon la revendication 8, caractérisée en ce que le prolongement (33) peut être déplacé, par rotation du boulon de butée (18), en une position dans laquelle il n'est pas en prise avec le levier d'encliquetage (19).

10. Ferrure d'assemblage selon la revendication 1, caractérisée en ce que le boulon de butée (18) est pourvu d'un filet extérieur et le perçage (59) est pourvu d'un filet intérieur correspondant.

11. Ferrure d'assemblage selon l'une quelconque des revendications précédentes, caractérisée en ce que le levier d'encliquetage (19, 50) est un levier coudé.

12. Ferrure d'assemblage selon la revendication 12, caractérisée en ce qu'une branche du levier coudé est chargée par un ressort et l'autre branche est pourvue d'une saillie (37) en forme de crochet.

13. Ferrure d'assemblage selon l'une quelconque des revendications précédentes, caractérisée en ce que l'élément d'extrémité (37) en forme de crochet est biseauté sur sa face externe dans la direction d'insertion de l'élément pouvant être saisi par l'arrière.

14. Ferrure d'assemblage selon l'une quelconque des revendications précédentes, caractérisée en ce que le flanc intérieur de l'élément d'extrémité en forme de crochet est pourvu d'un flanc d'encliquetage (41) biseauté ou arrondi.

15. Ferrure d'assemblage selon l'une quelconque des revendications précédentes, caractérisée en ce que le premier élément de ferrure (1) se compose d'un boulon vissable comportant une tête (7) en forme de champignon et le second élément de ferrure (4) est pourvu d'un orifice (12) dans lequel est placée la branche du levier d'encliquetage pourvue de l'élément en forme de crochet, et dans lequel le boulon de butée peut être introduit dans la direction radiale dudit orifice.

16. Ferrure d'assemblage selon l'une quelconque des revendications 1 à 14, caractérisée en ce que le premier élément de ferrure (50) se compose d'un élément de fixation en forme de pot comportant une partie (52) en forme de crochet (52) dans laquelle peut s'engager la partie en crochet réalisée de manière complémentaire du levier d'encliquetage (56).

17. Ferrure d'assemblage selon l'une quelconque des revendications 1 à 16, caractérisée en ce que l'axe (22) du perçage (17, 59) pour le boulon de butée (18, 58) est incliné par rapport à l'axe médian du deuxième élément de ferrure (4, 54) en forme de pot.

**Claims**

1. A joint-fitting for the detachable connection of two board shaped furniture parts (3, 5), preferably abutting on one another at right angles consisting of fitting parts (1, 4, 51, 54) which can be fixed to each of the furniture parts (3, 5) to be connected, whereof the first part (1) is provided with a part (7) capable of being gripped from behind, for example, a step, a supporting batten or a mushroom shaped head, behind which there grips or catch engages a hook-shaped end part (37, 55) of a pivotable engagement lever (19, 56) of the second fitting part (4, 54) for the interlocking of both fitting parts (1, 4, 51, 54), and of a spring loading the engagement lever (19, 56), which spring is inserted between the latter and a bearing component (18, 58) of the second fitting part (4, 54), characterized in that the bearing component (18, 58) is mounted for movement between a position locking the lever (19, 56) in its engaged position and at least one position loading the engagement lever via the spring (20, 60) and in that it is fixed in these positions.

2. A joint-fitting according to claim 1, characterized in that the bearing component (18) consists of a cylindrical bearing pin (18) mounted in a cylindrical cut out or bore of the housing-type second fitting part (4), which bearing pin can be fixed by means of a radial projection (32) in the recesses of the bore wall in different positions displaced in the axial direction of the bore.

3. A joint-fitting according to claim 2, characterized in that the radial projection consists of a dog (32) engaging in a guide groove (21, 23) provided in the wall of the bore (17).

4. A joint-fitting according to claim 3, characterized in that the guide groove (21, 23) extends approximately over the whole periphery of the inner wall of the bore (17).

5. A joint-fitting according to claim 3 or 4, characterized in that the guide groove consists of a peripheral part (21) without lead and of a peripheral part (23) with a lead, following the former.

6. A joint-fitting according to one of claims 1 to 5, characterized in that the housing (9) of the second fitting part (4) is formed in two parts with the partition line extending through its axial median plane, in that both housing parts are provided with parts (21, 23) of the guide groove, whereof one part (21) extends at right angles and one (23) at an acute angle to the median axis (22) of the bore (17), and in that the guide grooves are aligned with each other in a partition plane.

7. A joint-fitting according to one of the preceding claims 2–6, characterized in that the dog (32) is provided at the inner end of the bearing pin (18).

8. A joint-fitting according to one of the preceding claims, characterized in that the bearing pin (18) has an axial extension (33) wherewith the latter is supported in its pushed in or appropriately rotated position on the engagement lever (19).

9. A joint-fitting according to claim 8, characterized in that the extension (33) can be moved into a position by rotation of the bearing pin (18) wherein it is out of engagement with the engagement lever (19).

10. A joint-fitting according to claim 1, characterized in that the bearing pin (58) is provided with an external thread and the bore (59) with a corresponding internal thread.

11. A joint-fitting according to one of the preceding claims, characterized in that the engagement lever (19, 56) consists of a bent lever.

12. A joint-fitting according to claim 11, characterized in that one arm of the bent lever is spring loaded and in that the other is provided with the hook shaped projection (37).

13. A joint-fitting according to one of the preceding claims, characterized in that the hook shaped end part (37) is bevelled on its outer side in the insertion direction of the part that can be gripped from behind.

14. A joint-fitting according to one of the preceding claims, characterized in that the inner side of the hook shaped end part is provided with a bevelled or rounded engagement flank (41).

15. A joint-fitting according to one of the preceding claims, characterized in that the first fitting part (1) consists of a bolt that can be screwed in with a mushroom head (7), and in that the second housing shaped fitting part (4) is provided with an opening (12) wherein there lies the arm of the engagement lever, which is provided with the hook shaped part and into which the bearing pin (58) can be inserted in its radial direction.

16. A joint-fitting according to one of claims 1 to 14, characterized in that the first fitting part 50 consists of a pot shaped mounting component with a hook shaped part (52) behind which there engages the corresponding complementary hook shaped part of the engagement lever (56).

17. A joint-fitting according to one of claims 1 to 16, characterized in that the axis (22) of the bore (17, 59) for the bearing pin (18, 58) is inclined with respect to the median axis of the pot shaped second fitting part (4, 54).

FIG.1

FIG. 2

FIG. 3

FIG.4

FIG.5

FIG.6

FIG.7

FIG.8

FIG.9

FIG.10

FIG.11